# EUROPÄISCHE PATENTSCHRIFT

(11) **EP 1 587 699 B1**
(45) Veröffentlichungstag und Bekanntmachung des Hinweises auf die Patenterteilung: **04.05.2016**
(21) Anmeldenummer: 03782313.5
(22) Anmeldetag: 05.12.2003
(51) Int. Cl.: B60C 23/06

(54) **VERFAHREN ZUR VERBESSERUNG EINES INDIREKT MESSENDEN REIFENDRUCKERKENNUNGSSYSTEMS**
METHOD FOR IMPROVING A SYSTEM FOR RECOGNISING TYRE PRESSURE WHICH IS MEASURED IN AN INDIRECT MANNER
PROCEDE POUR AMELIORER UN SYSTEME D'IDENTIFICATION DE LA PRESSION DE PNEUS

(30) Priorität: 20.12.2002 DE 10261096
(43) Veröffentlichungstag der Anmeldung: 26.10.2005
(73) Patentinhaber: Continental Teves AG & Co. oHG, 60488 Frankfurt am Main (DE); Continental AG, 30165 Hannover (DE)
(72) Erfinder: GRIESSER, Martin, 65760 Eschborn (DE); KÖBE, Andreas, 64625 Bensheim (DE); EDLING, Frank, 65929 Frankfurt (DE); HOLTZ, Michael, 30938 Burgwedel-Töniz (DE); PERRAS, Karl, 75417 Mühlacker-Enzberg (DE)
(74) Vertreter: Brand, Markus
(86) Internationale Anmeldenummer: PCT/EP2003/013766
(87) Internationale Veröffentlichungsnummer: WO 2004/058519

(56) Entgegenhaltungen:
- EP-A- 0 855 597
- DE-A1- 19 959 554
- US-A- 5 670 716
- US-A- 5 826 210

## Beschreibung

Die Erfindung betrifft ein Verfahren gemäß Oberbegriff von Anspruch 1.

In Kraftfahrzeugen mit elektronischen Bremssystemen die eine ABS-Regelung (ABS: Anti-Blockier-System), eine Fahrdynamikregelung oder dergleichen aufweisen, werden oftmals auch Programme zur Erkennung eines Reifendruckverlusts ausgeführt, welche ausschließlich einen Reifendruckverlust daran erkennen können, dass sich als Folge des Druckverlusts Drehzahländerungen an den Rädern ergeben. Es ist außerdem bekannt, zur Erkennung der Fahrsituation Eingangssignale von Raddrehzahlsensoren entweder alleine oder gemeinsam mit weiteren Sensoren (Gierrate, Querbeschleunigung etc.) auszuwerten.

Die Erfindung beschäftigt sich mit dem Problem, dass bei indirekt messenden Druckverlusterkennungssystemen (DDS), wie insbesondere dem aus der DE 100 58 140 A1 bekannten Verfahren, die Häufigkeit von Fehlwarnungen steigt, wenn ein hoher Fahrzeugschwerpunkt vorliegt (z. B. Dachgepäckträger) oder ein Anhänger mit dem das Druckverlusterkennungssystem aufweisenden Fahrzeug gekoppelt ist. Diese indirekt messenden Druckverlusterkennungsverfahren lernen sogenannte Referenzwerte ein, welche im wesentlichen zum kreuzweisen Vergleich der einzelnen Räder dienen. Bei einem vierrädrigen Fahrzeug hat sich beispielsweise die Betrachtung dreier unabhängiger Referenzwerte durchgesetzt. Ein erster Referenzwert beschreibt das Verhältnis zweier sich an einer Achse befindender Räder, ein zweiter Referenzwert beschreibt das Verhältnis zweier sich an derselben Fahrzeugseite befindender Räder, und ein dritter Referenzwert beschreibt das Verhältnis zweier sich diagonal gegenüberliegenden Räder.
An sich bekannte indirekt messende Reifendruckkontrollsysteme, wie beispielsweise das in DE 199 61 681 A1 beschriebene, sind bereits durch Berücksichtigung von Fahrparametern, wie Gierrate etc. verbessert worden.

Aus der US 5,670,716 A ist ein gattungsgemäßes Verfahren zur Verbesserung eines indirekt messenden Reifendruckverlusterkennungssystems bekannt, in welchem die Fahrzeuglängsbeschleunigung berücksichtigt wird.
In der US 5,826,210 A wird ein indirekt messenden Reifendruckerkennungssystems beschrieben, das zur Erkennung eines Druckverlusts neben den Raddrehgeschwindigkeiten auf verschiedene zusätzliche Parameter, wie etwa die Querbeschleunigung zurückgreift.

Weiterhin ist aus der DE19959554 A ein indirekt messendes Reifendruckerkennungssystem bekannt, das auf die Fahrdynamikgröße Radmoment zurückgreift.

Daher besteht die Aufgabe der Erfindung darin, ein Verfahren bereitzustellen, welches die bekannten indirekten Reifendruckkontrollsysteme dahingehend verbessert, dass die Tendenz, eine Fehlwarnung zu erzeugen, weiter reduziert wird.
Diese Aufgabe wird erfindungsgemäß durch das Verfahren nach Anspruch 1 gelöst.

Durch das Verfahren nach der Erfindung lässt sich insgesamt die Tendenz eines Druckverlusterkennungssystems, wie z. B. DDS, eine Fehlwarnung zu erzeugen, noch weiter reduzieren.

Mit dem aufgespannten Fahrparameterraum werden bevorzugt bestimmte Kombinationen von Fahrparametern als ungültig erklärt. Besonders bevorzugt werden nur Referenzwerte, die zu einem Zeitpunkt ermittelt wurden, zu dem die betrachteten Fahrparameter innerhalb des Parameterraumes liegen, für das Verfahren zur Erkennung eines Druckverlusts verwendet. Die nicht verwendeten Referenzwerte können verworfen oder in Abhängigkeit der betrachteten Fahrparameter korrigiert werden.

Als Fahrparameter können nicht nur die Größen Radmoment, Fahrzeuggeschwindigkeit, Querbeschleunigung und Gierrate verwendet werden, sondern auch weitere Größen wie z. B. Kenngrößen für die Geradeausfahrt bzw. Kurvenkenngrößen, insbesondere das Einlernen einer Kurvenkenngröße in einer Lernphase, welche besonders bevorzugt nur in ausgewählten Fahrsituationen stattfindet, Reifentorsion und Schlupf.

Der Fahrparameter Radmoment ist hierbei als das Radmoment eines angetriebenen Rades oder einer sich entsprechend verhaltenden Größe anzusehen, wobei das Radmoment insbesondere über eine Leistungsbilanz, die sich unter anderem aus Motor- und Getriebedaten ergibt, ermittelt wird. Gierrate und Querbeschleunigung werden bei dem vorgestellten Verfahren entweder auf an sich bekannte Weise sensorisch gemessen oder aus Raddrehzahlinformationen gebildet.

Bevorzugt werden die Fahrparameter zur Aktivierung und/oder Deaktivierung der Datenaufnahme im Druckverlusterkennungsverfahren oder zur Korrektur der ermittelten Kenngrößen herangezogen.

Im einfachsten bevorzugten Fall wird das Gebiet, dass durch die Fahrparameter aufgespannt wird, je nach Dimension des Parameterraumes durch Geraden bzw. zwei- oder mehrdimensionale Flächen begrenzt, was jedoch nicht zwingend der Fall sein muss.

Vorzugsweise werden mindestens drei Fahrparameter kombiniert betrachtet.

Unter einer stationären Fahrt wird verstanden, dass sich das Kraftfahrzeug ungestört, unter möglichst idealen Bedingungen, geradeaus bewegt. Die "gedachte Kurve" lässt sich beispielsweise dadurch ermitteln, dass die Radmoment M an den Antriebsrädern während stationärer Fahrt für alle möglichen Fahrgeschwindigkeiten v aufgezeichnet wird. Hierdurch ergibt sich eine Funktion M(v).

Vorteilhafterweise kann mit dem Verfahren der Erfindung eine Bewertung des Einflusses von Radlast und Radmoment auf den Radschlupf durchgeführt werden. Von dem Ergebnis dieser Bewertung profitiert die Genauigkeit des indirekt messenden Druckverlusterkennungssystems (DDS).

Vorzugsweise umfasst das Verfahren zur Druckverlusterkennung eine Lernphase und eine Vergleichsphase. In der Vergleichsphase, welche sich an die Lernphase anschließt, werden aktuell ermittelte Referenzwerte mit Schwellen verglichen, die mit Hilfe von eingelernten Referenzwerten gebildet werden können.

Die Referenzwerte werden bevorzugt durch Berechnung eines Quotienten von Summen aus Raddrehzahlinformationen gebildet. Die Referenzwerte werden insbesondere gemittelt und/oder gefiltert. Ganz besonders bevorzugt werden auch einige oder alle Fahrparameter gemittelt und/oder gefiltert.

Das Einlernen der Referenzwerte erfolgt bevorzugt für mehrere Geschwindigkeitsintervalle individuell. Auch der Vergleich in der Vergleichsphase erfolgt bevorzugt individuell in verschiedenen Geschwindigkeitsintervallen.

Vorzugsweise wird zusätzlich eine Kurvenkenngröße gebildet und in der Fahrsituation "Geradeausfahrt" eingelernt, wobei ganz besonders bevorzugt zur Erkennung dieses Fahrzustandes ein zweites Geradeausfahrterkennungsverfahren eingesetzt werden kann.

Die Raddrehzahlinformationen zum Ermitteln der Fahrparameter lassen sich in manchen Fahrzeugen (z. B. Fahrzeuge ohne ESP) nicht direkt aus sensorisch bestimmten Informationen (Gierratensensor und dergl.) gewinnen. In diesen Fahrzeugen (sogenannte "ABS-Only"-Fahrzeuge) können die Fahrparameter aus den Raddrehzahlinformationen gebildet werden. Vorzugsweise werden nicht die im Funktionsmodul für das Antiblockiersystem (ABS) errechneten Radgeschwindigkeitsinformationen verwendet, sondern die Rohdaten, welche von den Raddrehzahlsensoren unkorrigiert verwendet werden. Auf diese Weise lässt sich eine besonders hohe Genauigkeit des Reifendruckerkennungssystems erzielen.

Eine vergleichsweise nicht so genaue Erkennung einer Geradeausfahrt lässt sich über ein separates Verfahren (zweites Geradausfahrterkennungsverfahren) durchführen. Vorzugsweise werden bei Erkennung einer Kurvenfahrt durch das zweite Geradeausfahrterkennungsverfahren bereits eingelernte Werte des ersten Geradeausfahrterkennungsverfahrens verworfen. Dieses zweite Verfahren erkennt insbesondere auch, wenn die Annahme "Geradeausfahrt" zum Lernen der invertierenden Kurvenradien falsch war. Das Lernen wird dann verworfen. Aus einer geschätzten Gierrate und Querbeschleunigung können Kriterien zum Aktivieren/Deaktivieren des indirekt messenden Druckverlusterkennungsverfahren (DDS) abgeleitet werden.

Weitere Merkmale und Vorteile des erfindungsgemäßen Verfahrens gehen aus der nachfolgenden Beschreibung der einzigen Figur hervor.

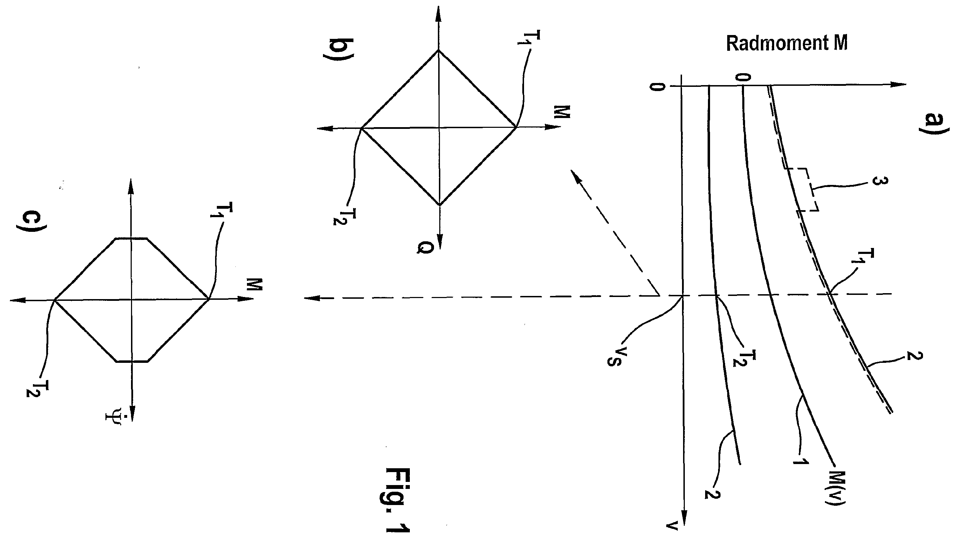

In Fig. 1a ist das Radmoment M gegen die Fahrzeuggeschwindigkeit v aufgetragen. Kurve 1 beschreibt hierbei eine Funktion M(v) des Radmomentes über der Fahrzeuggeschwindigkeit eines Fahrzeugs. Um diese Kurve 1 ist ein Band 2 gelegt, welches einen geschlossenen Fahrparameterraum in der durch das Radmoment und der Fahrzeuggeschwindigkeit aufgespannten Ebene bildet. Die Kurve 1 wird bei stationärer Fahrt aufgenommen. Bei einem Betrieb des Fahrzeugs mit einem Anhänger ergibt sich im Verlauf des Bandes 2 eine Unstetigkeit 3. Zur besseren Veranschaulichung ist der für den Anhängerbetrieb maßgebende Verlauf des Bandes 2 mit der Unstetigkeit 3 gestrichelt und zum Band 2 versetzt dargestellt. Bei einem bestimmten Wert VS der Fahrzeuggeschwindigkeit werden die Fahrparameterbereiche (dargestellt durch die Werte T1 und T2) des Radmomentes M gegen einen weiteren Fahrparameter, wie z. B. der Querbeschleunigung Q (dargestellt in Fig. 1b) oder der Gierrate Ψ̇ (dargestellt in Fig. 1c) aufgetragen, wodurch sich vollständig geschlossene Fahrparameterräume ergeben. Nur die Referenzwerte die innerhalb dieser Fahrparameterräume liegen, werden als gültige Referenzwerte zugelassen.

## Patentansprüche

1. Verfahren zur Verbesserung eines indirekt messenden Reifendruckerkennungssystems, wie insbesondere ein Druckverlusterkennungsverfahren auf Basis der Raddrehzahlinformationen (DDS), bei dem die Ermittlung von Referenzwerten von Fahrparametern abhängig gemacht wird, wobei ein zwei oder mehrdimensionaler vollständig geschlossener Fahrparameterraum erzeugt wird, innerhalb dem aktuell ermittelte Referenzwerte als gültig zugelassen werden, **dadurch gekennzeichnet, dass** ein Fahrparameter des Fahrparameterraums das Radmoment eines angetriebenen Rades oder eine sich entsprechend verhaltende Größe ist, wobei das Radmoment insbesondere über eine Leistungsbilanz ermittelt wird, die sich unter anderem aus Motor- und Getriebedaten ergibt.

2. Verfahren nach Anspruch 1, **dadurch gekennzeichnet, dass** die Fahrparameter eine Auswahl von zwei oder mehreren Fahrparameter aus der Gruppe
- Querbeschleunigung,
- Kenngröße für die Geradeausfahrt,
- Fahrzeuggierrate,
- Fahrzeugquerbeschleunigung,
- Radmoment,
- Reifentorsion,
- Schlupf und
- Fahrzeuggeschwindigkeit, insbesondere v_{ref} sind.

3. Verfahren nach Anspruch 1 oder 2, **dadurch gekennzeichnet, dass** die Fahrparameter zur Aktivierung und/oder Deaktivierung der Datenaufnahme im Druckverlusterkennungsverfahren oder zur Korrektur der ermittelten Kenngrößen herangezogen werden.

4. Verfahren nach mindestens einem der Ansprüche 1 bis 3, **dadurch gekennzeichnet, dass** Querbeschleunigung und Gierrate entweder sensorisch gemessen oder aus Raddrehzahlinformationen gebildet sind.

5. Verfahren nach mindestens einem der Ansprüche 1 bis 4, **dadurch gekennzeichnet, dass** um eine gedachte Kurve (1) der Funktion eines ersten Fahrparameters, welcher insbesondere das Radmoment ist, in Abhängigkeit eines zweiten Fahrparameters, welcher insbesondere die Fahrzeuggeschwindigkeit ist, ein Band (2) gelegt wird, welches den geschlossenen Fahrparameterraum in der durch den ersten Fahrparameter und dem zweiten Fahrparameter aufgespannten Ebene bildet, wobei die gedachte Kurve bei stationärer Fahrt aufgenommen wird.

6. Verfahren nach Anspruch 5, **dadurch gekennzeichnet, dass** der erste Fahrparameterbereich (T1, T2) bei einem bestimmten Wert des zweiten Fahrparameters (VS) gemeinsam mit einem dritten Fahrparameter, wie insbesondere der Querbeschleunigung und/oder der Gierrate, eine Ebene aufspannt, deren Fläche von dem zweiten Fahrparameter und dem dritten Fahrparameter abhängt.

7. Verfahren nach Anspruch 5 oder 6, **dadurch gekennzeichnet, dass** das Band eine Unstetigkeit (3) aufweist, welche den Fahrparameterbereich innerhalb des durch das Band bestimmten Bereichs innerhalb eines Bereichs des zweiten Fahrparameters aufweitet oder einengt.

## Claims

1. Method for improving a tyre-pressure-detection system which measures indirectly, such as, in particular, a pressure-loss-detection method on the basis of the wheel speed information (DDS), in which the determination of reference values is made dependent on driving parameters, wherein a two-dimensional or multi-dimensional, completely enclosed driving parameter space is generated, within which driving parameter space currently determined reference values are approved as valid, **characterized in that** a driving parameter of the driving parameter space is the wheel torque of a driven wheel or a variable which behaves correspondingly, wherein the wheel torque is determined, in particular, by means of a power balance which results, inter alia, from engine data and transmission data.

2. Method according to Claim 1, **characterized in that** the driving parameters are a selection of two or more driving parameters from the group
- lateral acceleration,
- characteristic for straight-ahead travel,
- vehicle yaw rate,
- vehicle lateral acceleration,
- wheel torque,
- tyre torsion,
- slip and
- vehicle speed, in particular V_{ref}.

3. Method according to Claim 1 or 2, **characterized in that** the driving parameters are used to activate and/or deactivate the recording of data in the pressure-loss-detection method or to correct the characteristic variables which are determined.

4. Method according to at least one of Claims 1 to 3, **characterized in that** the lateral acceleration and the yaw rate are either measured by a sensor or are formed from wheel speed information.

5. Method according to at least one of Claims 1 to 4, **characterized in that** a band (2) is placed around a virtual curve (1) of the function of a first driving parameter which is, in particular, the wheel torque, as a function of a second driving parameter which is, in particular, the speed of the vehicle, said band (2) forming the closed vehicle parameter space in the plane spanned by the first driving parameter and the second driving parameter, wherein the virtual curve is recorded during steady-state travel.

6. Method according to Claim 5, **characterized in that** at a specific value of the second driving parameter (VS), the first driving parameter range (T1, T2) spans, together with a third driving parameter such as, in particular, the lateral acceleration and/or the yaw rate, a plane whose area depends on the second driving parameter and the third driving parameter.

7. Method according to Claim 5 or 6, **characterized in that** the band has an irregularity (3) which makes the driving parameter range wider or narrower within the region determined by the band, within a region of the second parameter.

## Revendications

1. Procédé pour améliorer un système d'identification de pression de pneu à mesure indirecte, notamment procédé d'identification de perte de pression basé sur les informations de nombre de tours de roue (DDS), pour lequel le calcul de valeurs de référence est effectué en fonction de paramètres de conduite, un espace de paramètre de conduite entièrement fermé bidimensionnel ou pluridimensionnel étant produit à l'intérieur duquel des valeurs de référence actuellement calculées sont admises comme valides, **caractérisé en ce qu'**un paramètre de conduite de l'espace de paramètre de conduite est le couple de roue d'une roue entraînée ou une grandeur se comportant de façon correspondante, le couple de roue étant notamment calculé via un bilan de puissance obtenu entre autres à partir des données de moteur et de transmission.

2. Procédé selon la revendication 1, **caractérisé en ce que** les paramètres de conduite sont une sélection de deux ou plusieurs paramètres de conduite sélectionnés dans le groupe :
- accélération transversale ;
- grandeur caractéristique pour la conduite en ligne droite ;
- vitesse de lacet du véhicule ;
- accélération transversale du véhicule ;
- couple de roue ;
- torsion de pneumatique ;
- patinage ; et
- vitesse du véhicule, notamment v_{ref}.

3. Procédé selon la revendication 1 ou 2, **caractérisé en ce que** les paramètres de conduite sont utilisés pour l'activation et/ou la désactivation de l'enregistrement de données dans le procédé d'identification de perte de pression ou pour la correction des grandeurs caractéristiques calculées.

4. Procédé selon au moins l'une quelconque des revendications 1 à 3, **caractérisé en ce que** l'accélération transversale et la vitesse de lacet sont soit mesurées par voie de capteurs soit formées à partir d'informations de nombre de tours de roue.

5. Procédé selon au moins l'une quelconque des revendications 1 à 4, **caractérisé en ce qu'**une bande (2) est placée autour d'une courbe (1) non matérialisée de la fonction d'un premier paramètre de conduite prenant notamment la forme du couple de roue, en fonction d'un deuxième paramètre de conduite prenant notamment la forme de la vitesse du véhicule, ladite bande formant l'espace de paramètre de conduite fermé dans le plan défini par le premier paramètre de conduite et le deuxième paramètre, la courbe non matérialisée étant enregistrée en situation de conduite stationnaire.

6. Procédé selon la revendication 5, **caractérisé en ce que** la première plage de paramètre de conduite (T1, T2) définit un plan, pour une valeur définie du deuxième paramètre de conduite (VS), conjointement avec un troisième paramètre de conduite, notamment l'accélération transversale et/ou la vitesse de lacet, la surface dudit plan dépendant du deuxième paramètre de conduite et du troisième paramètre de conduite.

7. Procédé selon la revendication 5 ou 6, **caractérisé en ce que** la bande comporte une discontinuité (3) élargissant ou rétrécissant la plage de paramètre de conduite à l'intérieur de la zone définie par la bande, à l'intérieur d'une plage du deuxième paramètre de conduite.
